Europäisches Patentamt

European Patent Office

Office européen des brevets

(19)

(11) Veröffentlichungsnummer: **0 231 478 B1**

# EUROPÄISCHE PATENTSCHRIFT

(45) Veröffentlichungstag der Patentschrift: **13.11.91**

(51) Int. Cl.5: **G02B 5/28**

(21) Anmeldenummer: **86116935.7**

(22) Anmeldetag: **05.12.86**

(54) Teildurchlässiges optisches Filter und Verfahren zu seiner Herstellung.

(30) Priorität: **12.12.85 DE 3543812**

(43) Veröffentlichungstag der Anmeldung:
**12.08.87 Patentblatt 87/33**

(45) Bekanntmachung des Hinweises auf die
Patenterteilung:
**13.11.91 Patentblatt 91/46**

(84) Benannte Vertragsstaaten:
**CH DE FR GB LI NL**

(56) Entgegenhaltungen:
**FR-A- 2 140 382**
**US-A- 3 781 090**
**US-A- 3 926 508**
**US-A- 4 057 316**
**US-A- 4 436 363**

**PATENT ABSTRACTS OF JAPAN, Band 7, Nr.
105 (P-195)[1250], 7. Mai 1983 & JP-A-58-28
708**

(73) Patentinhaber: **LEYBOLD AKTIENGESELL-
SCHAFT**
**Wilhelm-Rohn-Strasse 25**
**W-6450 Hanau am Main 1(DE)**

(72) Erfinder: **Lobsiger, Werner, Dr.**
**Salzstrasse 3**
**W-6450 Hanau am Main(DE)**
Erfinder: **Lotz, Hans-Georg, Dr.**
**Hühnerberg 9a**
**W-6466 Gründau 2(DE)**

(74) Vertreter: **Zapfe, Hans, Dipl.-Ing.**
**Am Eichwald 7**
**W-6056 Heusenstamm 2 Rembrücken(DE)**

EP 0 231 478 B1

**Beschreibung**

Die Erfindung betrifft ein Verfahren zum Herstellen eines in Abhängigkeit von der Wellenlänge der auftreffenden Strahlung teildurchlässigen bzw. reflektierenden optischen Körpers durch abwechselndes Aufbringen einer Schichtenfolge aus hoch- und niedrigbrechenden Schichten aus dielektrischen Materialien auf ein zumindest für die längerwellige Strahlung durchlässiges Substrat.

Derartige Verfahren sind zur Herstellung von sogenannten Interferenzschichtsystem mit den unterschiedlichsten spektralen Eigenschaften in einer Vielzahl bekannt. In der Regel geht es darum, den Kurvenverlauf zwischen den Eigenschaften Transmission und Reflexion möglichst steil zu gestalten, um dem betreffenden Filter oder Spiegel ganz bestimmte spektrale Eigenschaften zu verleihen. Hierzu gehören höherwertige Antireflexschichten ebenso wie optische Filter, Kaltlichtspiegel etc.

In aller Regel ist bei den bekannten Verfahrensprodukten nur eine optische Achse vorhanden, die senkrecht zu den Oberflächen des optischen Körpers verläuft, zumindest aber senkrecht zum zentralen Teil des optischen Körpers, wenn es sich beispielsweise um Linsen oder Parabolspiegel handelt.

Unter den Bezugswellenlängen $\lambda_K$ und $\lambda_L$ sollen Wellenlängen verstanden werden, die für differenzierbare Bereiche für das Reflexions- und Transmissionsverhalten charakteristisch sind. So stehen zum Beispiel für den sichtbaren Bereich zwischen 400 und 800 nm die in der Tabelle auf Seite 12 angegebenen Bezugswellenlängen von 482, 555, 653 und 752 nm, während sich die Bezugswellenlängen $\lambda_L$ für den längerwelligen Bereich von 2000 bis 20000 nm nur als rechnerische Größe ergeben, die durch Vermessung des fertigen Produkts kontrolliert werden. Die Meß- und Regelvorgänge während des Aufbaus der Schichtenfolge werden entweder durch Photometrie mit sichtbarem Licht oder durch nicht-optische Meßverfahren wie die Schwingquarz-Methode durchgeführt.

Die Begriffe langwellig und kurzwellig sind hierbei relativ zueinander zu sehen. Im allgemeinen wird jedoch unter einer kurzwelligen Lichtstrahlung eine solche mit einem $\lambda_K$ zwischen 400 und 800 nm (sichtbares Licht) verstanden und unter einer langwelligen Strahlung eine Infrarotstrahlung mit einem $\lambda_L$ zwischen 2000 und 20000 nm.

Insbesondere in der Infrarot-Technik ist der Spektralbereich von 2000 bis 20000 nm (bzw. 2 $\mu$m bis 20 $\mu$m) von großer Bedeutung. Die hierfür verwendeten optischen Körper müssen in dem genannten, infraroten Spektralbereich durchlässig sein. Hierfür kommen Materialien wie Germanium, Silizium und nicht-oxidische Chalcogenide in Frage, die jedoch den Nachteil besitzen, im sichtbaren Spektralbereich eine starke Absorption aufzuweisen und daher für das Auge undurchsichtig zu sein. Umgekehrt absorbieren die üblichen, für das sichtbare Spektrum durchlässigen Glasarten im Infrarotbereich einen sehr hohen Anteil der Strahlung, so daß sie hierfür nicht in Frage kommen. Schließlich weisen die genannten, infrarotdurchlässigen Werkstoffe hohe Brechwerte auf, was zu erheblichen Reflexionsverlusten an den Oberflächen führt und die Transmission entsprechend vermindert.

Nun besteht aber in der Praxis die Forderung, die für das Auge unsichtbare langwellige Strahlung visuell zu verfolgen, was nur dadurch möglich ist, daß man dem Strahlengang der langwelligen Strahlung einen Strahlengang für sichtbares Licht zuordnet. Diese beiden Forderungen sind, wie vorstehend aufgezeigt wurde, zumindest nicht ohne weiteres miteinander zuvereinen.

Der Erfindung liegt daher die Aufgabe zugrunde, ein Verfahren zur Herstellung eines optischen Körpers anzugeben, der in Verbindung mit zwei zumindest teilweise unterschiedlichen Strahlengängen völlig differenzierte optische Eigenschaften aufweist, d.h. in bezug auf eine praktisch geradlinig hindurchgehende langwellige Strahlung ein sehr hohes Transmissionsverhalten, in bezug auf eine quer dazu ankommende kurzwellige Strahlung jedoch ein sehr hohes Reflexionsverhalten im Sinne eines Spiegels besitzt.

Die Lösung der gestellten Aufgabe erfolgt bei dem eingangs beschriebenen Verfahren erfindungsgemäß dadurch, daß man

a) die optische Gesamtdicke "D" der Schichtenfolge in Abhängigkeit von der Bezugswellenlänge $\lambda_L$ der längerwelligen Strahlung zu etwa $\lambda_L$ wählt, derart, daß die Schichtenfolge die Eigenschaft einer Antireflexschicht für $\lambda_L$ besitzt, und daß man

b) innerhalb der optischen Gesamtdicke "D" so viele einander abwechselnde Einzelschichten aus den hoch- und niedrigbrechenden Materialien aufbringt, daß deren optische Einzeldicke "s" klein ist im Verhältnis zur Bezugswellenlänge $\lambda_L$, gleichzeitig aber in Abhängigkeit von der Bezugswellenlänge $\lambda_K$ der kürzerwelligen Strahlung eine optische Dicke "s" von etwa $\lambda_K$ besitzt, derart, daß die Schichtenfolge die Eigenschaften einer Reflex-Schicht ("Spiegel") für $\lambda_K$ besitzt.

Die Gesamtdicke D wird dabei definiert als das Vierfache der Summe aller geometrischen Einzelschichtdicken $d_i$, jeweils multipliziert mit dem unmittelbar zugehörigen Brechungsindex $n_i$, wobei "i" für die laufende Bezifferung innerhalb der Schichtenfolge steht. Es ist mithin

2

$$D = 4 \cdot \sum_i n_i \cdot d_i \cdot$$

Die optische Dicke "s" einer jeden Einzelschicht berechnet sich bei senkrechtem Strahleinfall wie folgt:

$$s_i = 4 \cdot n_i \cdot d_i.$$

Durch das Merkmal a) wird erreicht, daß die längerwellige Strahlung weitgehend ungehindert durch den Substratwerkstoff hindurchtreten kann, d.h. die weiter oben genannten Werkstoffe Germanium, Silizium und nichtoxidische Chalcogenide besitzen in diesem Wellenlängenbereich ein sehr gutes Tranmissionsverhalten. Durch das Verhalten der Schichtenfolge als Antireflex-Schicht wird die ansonsten sehr störende Reflexion der längerwelligen Strahlung an den Oberflächen von etwa 30 % auf etwa 3 % verringert, d.h. auf ein Zehntel des Wertes des unbeschichteten Substrats. Die längerwellige Strahlung kann die Unterteilung der betreffenden Schicht in Einzelschichten nicht "wahrnehmen".

Durch das Merkmal b) wird erreicht, daß die kürzerwellige Strahlung, insbesondere sichtbares Licht, praktisch vollständig von der derart beschichteten Oberfläche des Substrats reflektiert wird, so daß auf das schlechte Transmissionsverhalten der Substratwerkstoffe im sichtbaren Spektralbereich keine Rücksicht mehr genommen werden muß.

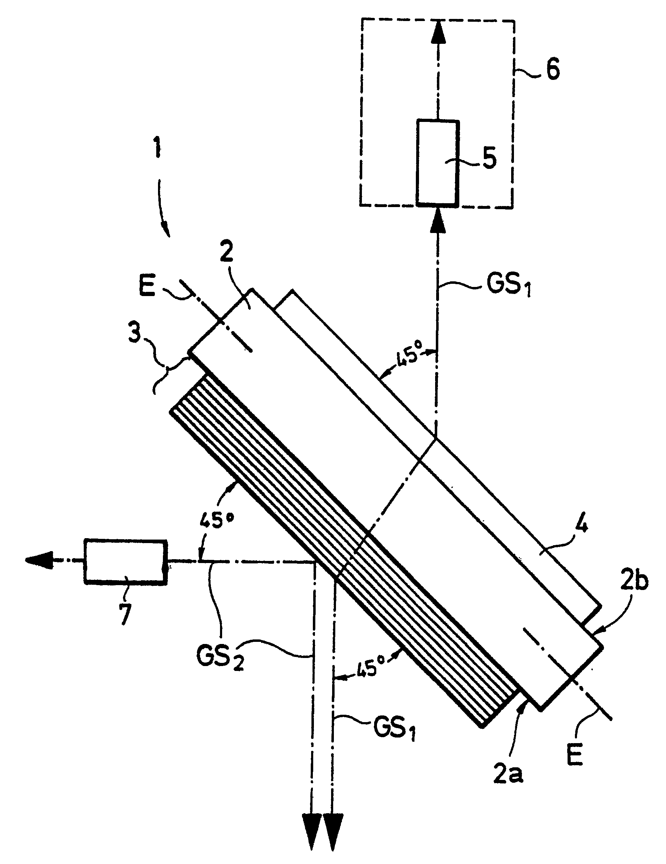

Dies setzt natürlich voraus, daß der erfindungsgemäß hergestellte optische Körper zur Vereinigung bzw. Trennung der beiden Strahlengänge aus sichtbarer und nicht-sichtbarer Strahlung in einer bestimmten Weise den beiden Strahlengängen zuzuordnen ist. Ganz besonders zweckmäßig wird mithin der optische Körper, wenn er durch eine planparallele Platte gebildet wird, mit seiner Hauptebene unter einem Winkel von 45 Grad zu den beiden, zunächst im rechten Winkel zueinander verlaufenden Strahlengängen ausgerichtet. Die Wirkung dieser Maßnahme wird anhand der beigefügten Figur in der Detailbeschreibung nachstehend noch näher erläutert.

Die Erfindung betrifft außerdem einen teildurchlässigen bzw. reflektierenden optischen Körper mit einer Schichtenfolge aus abwechselnd hoch- und niedrigbrechenden Schichten aus dielektrischen Materialien auf einem zumindest für die längerwellige Strahlung durchlässigen Substrat.

Zur Lösung der gleichen Aufgabe ist ein solcher optischer Körper dadurch gekennzeichnet, daß

a) die optische Gesamtdicke "D" der Schichtenfolge in Abhängigkeit von der Bezugswellenlänge $\lambda_L$ der längerwelligen Strahlung etwa $\lambda_L$ beträgt, derart, daß die Schichtenfolge die Eigenschaften einer Antireflexschicht für $\lambda_L$ besitzt, und daß

b) innerhalb der optischen Gesamtdicke "D" soviele einander abwechselnde Einzelschichten aus den hoch- und niedrigbrechenden Materialien untergebracht sind, daß deren Einzeldicke klein ist im Verhältnis zur Bezugswellenlänge $\lambda_L$, gleichzeitig aber in Abhängigkeit von der Bezugswellenlänge $\lambda_K$ der kürzerwelligen Strahlung eine optische Dicke "s" von etwa $\lambda_K$ besitzt, derart, daß die Schiohtenfolge die Eigenschaften einer Reflex-Schicht ("Spiegel") für $\lambda_K$ besitzt.

Es ist dabei besonders vorteilhaft, den optischen Körper mit seiner Hauptebene E-E unter einem Winkel von 45 Grad zu zwei Strahlengängen $SG_1$ und $SG_2$ für kurzwellige und langwellige Strahlung auszurichten.

Während die Strahlengänge in diesem Fall von der Sicht- bzw. Auswerteseite her unter einem Winkel von 90 Grad zueinander unter Winkeln von jeweils 45 Grad auf den optischen Körper auftreffen, haben die Strahlengänge nach ihrer Transmission bzw. Reflexion zueinander einen parallelen Verlauf, so daß das gleiche Objekt sowohl durch auf Infrarot-Strahlung ansprechende Auswertegeräte als auch visuell verfolgt werden kann.

Ein Ausführungsbeispiel des Gegenstandes der Erfindung wird nachfolgend anhand der Figur und eines Verfahrensbeispieles näher erläutert.

Die Figur zeigt den optischen Körper im Zusammenwirken mit zwei Strahlengängen $GS_1$ und $GS_2$.

In der Figur ist ein optischer Körper 1 dargestellt, der aus einem Substrat 2 mit einer erfindungsgemäßen Schichtenfolge 3 und einer herkömmlichen Antireflexschicht 4 besteht.

Das Substrat 2 ist eine von planparallelen Flächen 2a und 2b begrenzte Platte aus Germanium mit einem Brechungsindex n = 4,0. Dieses Substratmaterial ist für die längerwellige Strahlung einer Strahlenquelle 5 durchlässig, die Teil eines Auswertegerätes 6 ist, zu dem ein Teil der Strahlung zurückkehrt. Die optische Achse der Strahlenquelle definiert einen ersten Strahlengang $GS_1$, der unter einem Winkel von 45 Grad zur Hauptebene E-E des optischen Körpers 1 verläuft, wobei diese Hauptebene E-E definitionsgemäß in der Mitte zwischen den planparallelen Flächen 2a und 2b verläuft. Der Parallelversatz innerhalb des

Strahlenganges GS$_1$ ist durch die bekannten optischen Gesetze bedingt.

Die Antireflexschicht 4 ist auf die längerwellige Strahlung der Strahlenquelle 5 ausgelegt. Die Herstellung und Beschaffenheit einer derartigen Antireflexschicht ist jedoch Stand der Technik, so daß hierauf nicht näher eingegangen zu werden braucht.

Auf derjenigen Seite des Substrats 2, auf der sich die erfindungsgemäße Schichtenfolge 3 befindet, befindet sich außerdem eine Optik 7, die im einfachsten Fall ein Fernglas sein kann. Diese definiert mit ihrer optischen Achse einen zweiten Strahlengang GS$_2$, dessen Einfalls- und Ausfallswinkel, bezogen auf die besagte Hauptebene E-E gleichfalls 45 Grad beträgt, wie dies in der Figur dargestellt ist. Dadurch werden aus zwei ursprünglich unter einem Winkel von 90 Grad zueinander verlaufenden Strahlengängen zwei parallele Strahlengänge erzeugt.

Die erfindungsgemäße Schichtenfolge 3, die in der Figur nur sehr schematisch dargestellt ist, hat den in der nachfolgenden Tabelle widergegebenen Aufbau, wobei die Schichten in der Reihenfolge ihrer Herstellung beziffert sind, d.h. die Schicht Nummer 1 liegt unmittelbar am Substrat 2 an:

## Tabelle

| Schicht-Nummer | Schicht-material | | optische Dicke "s" |
|---|---|---|---|
| 18. | ZnS | = | 482 nm |
| 17. | $ThF_4$ | = | 555 nm |
| 16. | ZnS | = | 482 nm |
| 15. | $ThF_4$ | = | 555 nm |
| 14. | ZnS | = | 482 nm |
| 13. | $ThF_4$ | = | 555 nm |
| 12. | ZnS | = | 482 nm |
| 11. | $ThF_4$ | = | 555 nm |
| 10. | ZnS | = | 482 nm |
| 9. | $ThF_4$ | = | 752 nm |
| 8. | ZnS | = | 653 nm |
| 7. | $ThF_4$ | = | 752 nm |
| 6. | ZnS | = | 653 nm |
| 5. | $ThF_4$ | = | 752 nm |
| 4. | ZnS | = | 653 nm |
| 3. | $ThF_4$ | = | 752 nm |
| 2. | ZnS | = | 653 nm |
| 1. | $ThF_4$ | = | 752 nm |

SUBSTRAT

gesamt: D = 11.002 nm

Der in der Tabelle angegebene Schichtenaufbau ist jedoch nur beispielhaft und hinsichtlich der Anzahl der Einzelschichten auch nur bedingt kritisch. So ist beispielsweise die Anzahl der Einzelschichten proportional zur Lage des Minimums in der Reflexionskurve. Dabei gelten größenordnungsmäßig folgende Zusammenhänge:

| Minimum bei (Wellenlänge) | Schichtenzahl |
|---|---|
| 4.500 nm | 8 |
| 5.500 nm | 10 |
| 6.500 nm | 12 |
| 7.500 nm | 14 |

Beispiel:

In einer Vakuum-Aufdampfanlage des Typs A 1100 Q (Hersteller: Leybold-Heraeus GmbH) wurde auf einem Germanium-Substrat die in der Tabelle angegebene Schichtenfolge mit insgesamt 18 Einzelschichten erzeugt. Die plattenförmigen Germaniumsubstrate mit einem Durchmesser von 25 mm und einer Dicke von 1 mm waren dabei in einer kalottenförmigen Halterung eingespannt, die oberhalb der Verdampferquellen für die beiden Schichtmaterialien in einem Abstand von ca. 50 cm rotierte. Die Substrate wurden während der Bedampfung durch eine Strahlungsbeheizung auf eine Temperatur von 150 °C gebracht. Die Beschichtungsmaterialien Thoriumfluorid einerseits und Zinksulfid andererseits wurden aus einem Tantal- bzw. Wolfram-Schiffchen verdampft, die durch direkten Stromdurchfluß beheizt wurden.

Die Anlage wurde innerhalb von 30 Minuten auf einen Druck von $5 \times 10^{-4}$ Pa evakuiert. Nach einer Heizzeit von einer Stunde wurden die Substrate in einer Argonatmosphäre bei einem Druck von 5 Pa 10 Minuten in einer Glimmentladung vorbehandelt (gereinigt), worauf anschliessend bei einem Druck von $2 \times 10^{-4}$ Pa die Schichten aus $ThF_4$ und $ZnS$ in abwechselnder Reihenfolge und mit den angegebenen Schichtdicken aufgedampft wurden.

Der Schichtaufbau und die Steuerung der Verdampferquellen erfolgte mittels eines optischen Schichtdickenmessgerätes bekannter Bauart.

Die solchermaßen hergestellten optischen Körper besassen im sichtbaren Bereich eine Reflexion, deren Maximum 90 % überstieg, wobei gleichzeitig die Reflexion im Infrarotbereich, die bei unbeschichteten Germanium-Substraten etwa 30 % beträgt, bei einer Wellenlänge von 10.000 nm auf etwa 3 % reduziert wurde.

Wie aus der Tabelle hervorgeht, betrug die Summe aller optischen Schichtdicken 11.002 nm. Dies ist ein Wert, der sehr weitgehend der längerwelligen Bezugswellenlänge $\lambda_L$ von 10.000 nm entspricht. Weiterhin ist der Tabelle zu entnehmen, daß die optischen Dicken der Einzelschichten, die zwischen 482 nm und 752 nm liegen, den Bezugswellenlängen von $\lambda_K$ der kürzerwelligen Strahlung innerhalb des Bereichs von 400 bis 800 nm entsprechen.

Aus den vorstehenden Ausführungen ergibt sich, daß die Brechwerte der Einzelschichten sowie die gesamte Schichtenzahl derart aufeinander abgestimmt sind, daß im sichtbaren Spektralbereich eine hohe Reflexionswirkung (Verspiegelung) eintritt, und zugleich die Oberfläche des optischen Körpers eine Reflexionsverminderung der durchdringenden Infratrotstrahlung und deshalb eine erhöhte Durchlässigkeit erhält. Das Reflexionsband im sichtbaren Bereich besteht aus einfach herzustellenden Viertelwellenlängensystemen (wenn man die geometrische Schichtdicke betrachtet), ohne daß irgendwelche Maßnahmen für die Infrarot-Entspiegelung vorzunehmen sind. Durch die gesamte optische Dicke des Reflexionsbandes im sichtbaren Bereich wird der Wellenlängenbereich des Reflexionsminimums für die längerwellige Strahlung festgelegt. Dadurch können beim Schichtsystem zusätzliche Maßnahmen, die ansonsten für eine Durchlässigkeit der längerwelligen Strahlung erforderlich wären,entfallen, da das Schichtsystem in seiner Gesamtheit eine Entspiegelung der längerwelligen Strahlung darstellt. Der überraschende Effekt beruht auf der Tatsache, daß die längerwellige Strahlung die zahlreichen Einzelschichten innerhalb der Gesamtdicke D nicht "wahrnimmt", so daß die betreffende Schichtenfolge für die längerwellige Strahlung eine praktisch homogene Schicht darstellt.

## Patentansprüche

1. Verfahren zum Herstellen eines in Abhängigkeit von der Wellenlänge der auftreffenden Strahlung teildurchlässigen bzw. reflektierenden optischen Körpers durch abwechselndes Aufbringen einer Schichtenfolge aus hoch- und niedrigbrechenden Schichten aus dielektrischen Materialien auf ein zumindest für die längerwellige Strahlung durchlässiges Substrat, dadurch gekennzeichnet, daß man

    a) die optische Gesamtdicke "D" der Schichtenfolge in Abhängigkeit von der Bezugswellenlänge $\lambda_L$ der längerwelligen Strahlung zu etwa $\lambda_L$ wählt, derart, daß die Schichtenfolge, deren Dicke "D" der Summe aller optischen Einzelschichtdicken "s" entspricht, schaften einer Antireflex-Schicht für $\lambda_L$

besitzt, und daß man

b) innerhalb der optischen Gesamtdicke "D" soviele einander abwechselnde Einzelschichten aus den hoch- und niedrigbrechenden Materialien aufbringt, daß deren optische Einzeldicke "s", die dem Vierfachen der geometrischen Einzelschichtdicke multipliziert mit dem jeweiligem Brechungsindex entspricht, klein ist im Verhältnis zur Bezugswellenlänge $\lambda_L$, gleichzeitig aber in Abhängigkeit von der Bezugswellenlänge $\lambda_K$ der kürzerwelligen Strahlung eine optische Dicke "s" von etwa $\lambda_K$ besitzt, derart, daß die Schichtenfolge die Eigenschaften einer Reflexschicht ("Spiegel") für $\lambda_K$ besitzt.

2. Teildurchlässiger bzw. reflektierender optischer Körper mit einer Schichtenfolge aus abwechselnd hoch- und niedrigbrechenden Schichten aus dielektrischen Materialien auf einem zumindest für die längerwellige Strahlung durchlässigen Substrat, dadurch gekennzeichnet, daß

a) die optische Gesamtdicke "D" der Schichtenfolge in Abhängigkeit von der Bezugswellenlänge $\lambda_L$ der längerwelligen Strahlung etwa $\lambda_L$ beträgt, derart, daß die Schichtenfolge, deren Dicke "D" der Summe aller optischen Einzelschichtdicken "s" entspricht, die Eigenschaften einer Antireflexschicht für $\lambda_L$ besitzt, und daß

b) innerhalb der optischen Gesamtdicke "D" soviele einander abwechselnde Einzelschichten aus den hoch- und niedrigbrechenden Materialien untergebracht sind, daß deren optische Einzeldicke "s", die dem Vierfachen der geometrischen Einzelschichtdicke multipliziert mit dem jeweiligem Brechungsindex entspricht, klein ist im Verhältnis zur Bezugswellenlänge $\lambda_L$, gleichzeitig aber in Abhängigkeit von der Bezugswellenlänge $\lambda_K$ der kürzerwelligen Strahlung eine optische Dicke "s" von etwa $\lambda_K$ besitzt, derart, daß die Schichtenfolge die Eigenschaften einer Reflex-Schicht ("Spiegel") für $\lambda_K$ besitzt.

3. Optischer Körper nach Anspruch 2, dadurch gekennzeichnet, daß er mit seiner Hauptebene (E-E) unter einem Winkel von 45 Grad zu zwei Strahlengängen ($GS_1$ und $GS_2$) für kurzwellige und langwellige Strahlung ausgerichtet ist.

## Claims

1. Method of making an optical body, which is partly permeable or reflecting as a function of the wavelength of the incident radiation, by the alternate application of a series of layers of dielectric materials which have a high and low refractive index on a substrate which is permeable at least to longer-wave radiation, characterised in that

a) the optical total thickness "D" of the series of layers as a function of the reference wavelength $\lambda_L$ of the longer-wave radiation is chosen at approximately $\lambda_L$, in such a manner that the series of layers, whose thickness "D" corresponds to the sum of all optical individual layer thicknesses "s", has the properties of an anti-reflecting layer for $\lambda_L$, and in that

b) within the optical total thickness "D", so many alternating individual layers of materials with a high and low refractive index are applied, that their optical individual thickness "s", which corresponds to four times the geometric individual layer thickness multiplied by the respective refractive index, is small in comparison to the reference wavelength $\lambda_L$, but at the same time has, as a function of the reference wavelength $\lambda_K$ of shorter-wave radiation, an optical thickness "s" of approximately $\lambda_K$, such that the series of layers has the properties of a reflecting layer ("mirror") for $\lambda_K$.

2. Partly permeable or reflecting optical body with a series of layers of dielectric materials with alternately high and low refractive indices on a substrate permeable at least to longer-wave radiation, characterised in that

a) the optical total thickness "D" of the series of layers as a function of the reference wavelength $\lambda_L$ of longer-wave radiation is approximately $\lambda_L$, such that the series of layers, whose thickness "D" corresponds to the sum of all optical-individual layer thicknesses "s", has the properties of an anti-reflecting layer for $\lambda_L$, and in that

b) so many alternating individual layers of materials with high and low refractive indices are accommodated within the optical total thickness "D", that their optical individual thickness "s", which corresponds to four times the geometric individual layer thickness multiplied by the respective refractive index, is small in comparison to the reference wavelength $\lambda_L$, but at the same time has, as a function of the reference wavelength $\lambda_K$ of shorter-wave radiation, an optical thickness "s" of approximately $\lambda_K$, such that the series of layers has the properties of a reflecting layer ("mirror") for

$\lambda_K$.

3. Optical body according to claim 2, characterised in that it is oriented with its main plane (E-E) at an angle of 45 degrees to two beam paths $GS_1$ and $GS_2$ for short-wave and long-wave radiation.

**Revendications**

1. Procédé de réalisation d'un élément optique partiellement transparent ou, selon le cas, réfléchissant, en fonction de la longueur d'onde du rayonnement incident, par apport alterné d'une suite de couches à fort et faible indice de réfraction, en matières diélectriques, sur un substrat transparent pour le rayonnement à plus grande longueur d'onde, caractérisé par le fait que

a) on choisit l'épaisseur optique totale "D" de la suite de couches, en fonction de la longueur d'onde de référence $\lambda_L$ du rayonnement à plus grande longueur d'onde sensiblement de manière que la suite de couches dotée d'une épaisseur "D" correspondant à la somme de toutes les épaisseurs optiques "s" des couches individuelles possède les caractéristiques d'une couche antireflet pour $\lambda_L$, et

b) à l'intérieur de l'épaisseur optique totale "D", on apporte des couches individuelles alternées, en matières à fort et faible indice de réfraction, en quantité telle que leur épaisseur optique individuelle "s", correspondant au quadruple de l'épaisseur géométrique d'une couche individuelle multiplié par l'indice de réfraction concerné, soit petite par rapport à la longueur d'onde de référence $\lambda_L$, mais possède en même temps, en fonction de la longueur d'onde de référence $\lambda_K$ du rayonnement à plus courte longueur d'onde, une épaisseur optique "s" d'environ $\lambda_K$, de manière que la suite de couches possède, pour $\lambda_K$, les propriétés d'une couche réfléchissante ("miroir").

2. Elément optique partiellement transparent ou, selon le cas, réfléchissant, comportant une suite de couches, faite de couches de matières diélectriques ayant tour à tour un fort et un faible indice de réfraction, sur un substrat transparent au moins pour le rayonnement à plus grande longueur d'onde, caractérisé par le fait que

a) l'épaisseur optique totale "D" de la suite de couches, en fonction de la longueur d'onde de référence $\lambda_L$ du rayonnement à plus grande longueur d'onde vaut environ $\lambda_L$, de manière que la suite de couches, dotée d'une épaisseur "D" correspondant à la somme de toutes les épaisseurs optiques "s" des couches individuelles, possède les caractéristiques d'une couche antireflet pour $\lambda_L$, et par le fait

b) qu'à l'intérieur de l'épaisseur optique totale "D" les couches individuelles alternées, en matières à fort et faible indice de réfraction, sont apportées en quantité telle que leur épaisseur optique individuelle "s", correspondant au quadruple de l'épaisseur géométrique d'une couche individuelle multiplié par l'indice de réfraction concerné, soit petite par rapport à la longueur d'onde de référence $\lambda_L$, mais possède en même temps, en fonction de la longueur d'onde de référence $\lambda_K$ du rayonnement à plus courte longueur d'onde, une épaisseur optique "s" d'environ $\lambda_K$, de manière que la suite de couches possède, pour $\lambda_K$, les propriétés d'une couche réfléchissante ("miroir").

3. Elément optique selon revendication 2, caractérisé par le fait qu'il est orienté, par son plan principal (E-E), sous un angle de 45 degrés par rapport aux deux trajets de rayons ($GS_1$ et $GS_2$) pour le rayonnement à courte longueur d'onde et à grande longueur d'onde.